# EUROPEAN PATENT SPECIFICATION

(11) **EP 3 468 721 B1**
(45) Date of publication and mention of the grant of the patent: **11.09.2019**
(21) Application number: 17740089.2
(22) Date of filing: 01.06.2017
(51) Int. Cl.: B04C 5/08, C02F 1/38, C02F 1/48, F24D 19/00, F16L 55/24, B03C 1/033, B03C 1/28, B04C 5/12, B04C 9/00

(54) **FILTER ASSEMBLY FOR HEATING PLANTS AND THE LIKE**
FILTERANORDNUNG FÜR HEIZUNGSANLAGEN UND DERGLEICHEN
ENSEMBLE FILTRE DESTINÉ À DES INSTALLATIONS DE CHAUFFAGE ET ANALOGUES

(30) Priority: 14.06.2016 IT UA20164363
(43) Date of publication of application: 17.04.2019
(73) Proprietor: Giacomini S.p.A., 28017 S. Maurizio d'Opaglio (NO) (IT)
(72) Inventor: ROSA BRUSIN, Marco, 28017 San Maurizio d'Opaglio (Novara) (JP); MOLINA, Samuele, 28017 San Maurizio d'Opaglio (Novara) (JP); BIZZO, Mauro, 28017 San Maurizio d'Opaglio (Novara) (JP)
(74) Representative: Tana, Maria Gabriella
(86) International application number: PCT/IB2017/053226
(87) International publication number: WO 2017/216669

(56) References cited:
- EP-A1- 2 829 811
- WO-A1-2009/122127
- WO-A2-2014/068339
- GB-A- 2 491 246

## Description

### TECHNICAL FIELD

The present invention relates to the field of filter assemblies to be used in heating plants, in order to protect pump, boilers, and similar.

### STATE OF THE ART

In the state of the art, filter assemblies are known to be installed on the ducts of the heating plant in order to protect them from impurities that may be present in the fluid circulating in the plant itself.

Examples of such filter assemblies are disclosed in international patent application WO2009/122127 to ALPHA FRY LTD and in UK patent application GB 2491246 A to Adey Holdings Ltd.

This filter assembly is provided with a main body equipped with an inlet and outlet for the fluid to be filtered; the body houses a magnet and a cyclone filter, aimed at filtering the metal impurities of the liquid through the combined action of mechanical fall-off filtering (determined by the cyclone) and magnetic filtering (due to the permanent magnet).

The assembly of this filter assembly provides a mandatory orientation for the body, in order to allow the cyclone to perform the solid-liquid separation; it goes without saying that a different orientation, in fact, would compromise its operation.

This, along with the overall size and the providing of the two inlet and outlet ducts radially placed with respect to the body, forces the installer to look for suitable positions along the plant, without which the assembly operation is not possible.

In the absence of such positions, the installer is forced to mount on the plant ducts for the fittings, usually at right angle, to align the inlet and outlet of the assembly with the ducts themselves; however this, in addition to obviously adding costs to the installation operations, also causes undesired load losses along the plant, resulting in the need of providing a suitable pump (or checking whether the installed pump is sufficient) and, in any case, of increasing the energy consumption of the same.

In the state of the art, solutions are also known wherein the body of the assembly (similar to the one described above, i.e. equipped with inlet, outlet, cyclone and permanent magnet) can be mounted in different positions, yet in some of them the operation of the cyclone separator is prevented by its incorrect orientation, so that the filtering action is fully performed by the permanent magnet.

Therefore, in these solutions, in order to avoid having to provide additional fittings on the plant, a non-optimal filtering is accepted, by mounting the filter assembly with a different orientation.

Considering the above-described state of the art comes out that it is sought-after in the technical field to have a filter assembly for heating plants, which is compact and able to allow for a versatile assembly, avoiding to provide additional fittings to those already installed, while keeping at the same time the full functionality of the cyclone and the magnet.

### OBJECTS AND SUMMARY OF THE INVENTION

It is the object of the present invention to overcome the drawbacks of the known art.

It is a further object of the present invention to provide a filter assembly for heating plants, which is compact and allows for a versatile assembly.

Another object of the invention is to provide a filter assembly that can be easily installed even under a domestic boiler, where spaces are normally limited and the assembly operation of an assembly according to the known art is extremely complex, if not impossible, while maintaining the full functionality of the assembly.

These and further objects of the present invention are achieved by means of a filter assembly incorporating the features of the attached claims, which form an integral part of the present disclosure.

The general idea behind the present invention is to provide a filter assembly comprising
- a filter body which defines an internal cavity,
- a supply duct, in fluid communication with the cavity of the filter body, intended to feed the filter body with a fluid,
- a discharge duct, in fluid communication with said cavity of the filter body, intended to allow the outflow of the fluid from the body,
wherein in the filter body a cyclone separator and a permanent magnet are housed, placed along a circuit for the passing through of the filter body from the supply duct to the discharge one by the fluid, wherein, according to the invention, the filter assembly comprises a connection flange for the fluid connection with ducts of a heating plant or similar, said flange comprising a first and a second inlet fitting and an outlet fitting, said first and second inlet fittings being in fluid communication with the supply duct, said outlet fitting being in fluid communication with the discharge duct, said first and second inlet fitting being oriented differently relative to the body.

It is thus possible to easily orient the filter assembly according to the invention so that it can be assembled even in limited space conditions, ensuring both to preserve the full functionality of the filter assembly and avoid the installation of elbow fittings on the heating plant ducts.

According to an advantageous feature, even independently of the foregoing, the first and second inlet fittings are substantially perpendicular to each other, to facilitate the assembly operation in the most circumstances.

According to an advantageous feature, even independently of the foregoing, the connection flange and the filter body are connected with a sealingly cylindrical joint, so that the connection flange is rotatable with respect to the filter body, in order to make the installation more versatile, even in locations below boilers.

According to an advantageous feature, even independently of the foregoing, the cyclone separator comprises, in succession to one another in the circuit passing through the filter body, from the supply duct to the discharge duct by the fluid:
- an inlet chamber substantially cylindrical
- a separation chamber substantially conical
- a filtering chamber
wherein the supply duct is radially connected to the inlet chamber; in this way the space occupied by the assembly is compacted.

According to an advantageous feature, even independently of the foregoing, the filtering chamber comprises a substantially toroidal portion that develops at least partly around and externally to said separation chamber, for the benefit of a further space compaction.

According to an advantageous feature, even independently of the foregoing, the filter body comprises an annular return chamber that develops at least partly around the cyclone for the same above mentioned reasons.

According to an advantageous feature, even independently of the foregoing, the annular return chamber is placed around at least part of the inlet chamber, for the benefit of a further space compaction.

According to an advantageous feature, even independently of the foregoing, the discharge duct is connected - preferably radially - to the annular return chamber to facilitate the discharge and reduce load losses.

According to an advantageous feature, even independently of the foregoing, the discharge duct is at least partly concentric and external to the supply duct, so as to simplify the realization of a rotating sealing sleeve, which forms the connection flange.

According to an advantageous feature, even independently of the foregoing, the assembly includes a case for housing the permanent magnet, which extends into the inlet chamber of the cyclone to improve the filtration.

According to an advantageous feature, even independently of the foregoing, the case for housing the permanent magnet extends radially in the inlet chamber of the cyclone, to be placed in front of the supply duct and to improve the filtration.

According to a further advantageous feature, the case for housing the permanent magnet extends axially in the inlet chamber of the cyclone in order to improve the swirling motion of the fluid entering the cyclone.

According to an advantageous feature, even independently of the foregoing, the case for housing the permanent magnet extends radially partly in the annular return chamber, to exert an additional cleaning action downstream of the cyclone and a first cleaning action by the magnet itself.

According to an advantageous feature, even independently of the foregoing, the filtering chamber houses a mesh filter substantially cylindrical which delimits the filtering chamber with respect to the annular return chamber to maximize the filtering surface.

According to an advantageous feature, even independently of the foregoing, the filtering chamber houses a substantially ring-shaped mesh filter placed crosswise to the walls of the filtering chamber to reduce overall dimensions.

According to an advantageous feature, even independently of the foregoing, the assembly comprises:
- a closable opening for cleaning in communication with the cyclone and open towards the outside of the body,
- a closable access opening for the permanent magnet,
- a removable cap for closing the inlet chamber of the cyclone,
- an air vent for the inlet chamber of the cyclone.

Further advantageous features are the subject matter of the appended claims, which forms an integral part of this disclosure.

### BRIEF DESCRIPTION OF THE DRAWINGS

The invention will be described below with reference to non-limiting examples, provided for explanatory and non-limiting purposes in the accompanying drawings. These drawings illustrate different aspects and embodiments of the invention and, where appropriate, reference numbers illustrating structures, components, materials and/or similar elements in different figures are indicated by similar reference numerals.

In the attached figures:
Figure 1 shows a sectional view of a first embodiment of a filter assembly according to the invention;
Figure 2 shows a sectional view of a second embodiment of a filter assembly according to the invention;
Figure 3 shows a sectional view of a third embodiment of a filter assembly according to the invention.

### DETAILED DESCRIPTION OF THE INVENTION

While the invention can be changed according to different modifications and alternative constructions, some preferred embodiments are shown in the drawings and will be described below in detail.

It should be understood, however, that there is no intention of limiting the invention to the specific illustrated embodiment but, on the contrary, it aims at covering all modifications, alternative constructions, and equivalents falling within the scope of the invention as defined in the claims.

The use of "for example", "etc.", "or" refers to non-exclusive non-limiting alternatives, unless otherwise stated.

The use of "includes" means "includes but not limited to", unless otherwise stated.

Indications such as "vertical" and "horizontal", "upper" and "lower" (in the absence of other indications) should be read with reference to the mounting (or operating) conditions and referring to the normal terminology used in the current language wherein "vertical" indicates a direction substantially parallel to that of the gravity vector "g", and "horizontal" indicates a perpendicular direction to it.

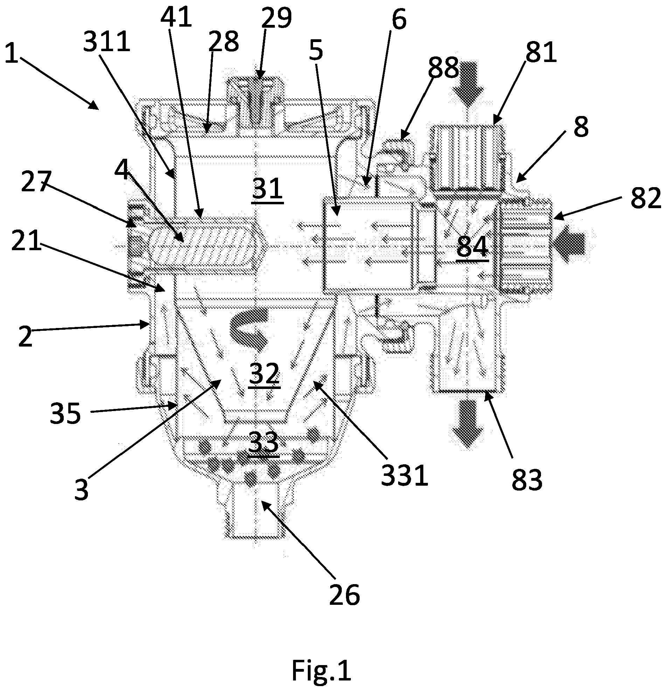

Referring to Figure 1, a preferred embodiment of a filter assembly, generally designated with the reference numeral 1, according to the invention will be described firstly.

In its general features, the filter assembly 1 comprises a filter body 2 defining an internal cavity; the filter body 2 is sealed and delimited by perimeter walls on which it is possible to provide closable opening or vents, which will be further examined below.

Typically, the filter body 2 is made of plastic, but it could also be made of metal.

The filter assembly 1 comprises a supply duct 5 and a discharge duct 6 both in fluid communication with the inner cavity of the filter body 2, so that a fluid passes through it, under operating conditions, from the supply duct 5, from which it is inserted up to the discharge duct 6, from which it is released.

Typically, in domestic heating plants, to which the filter assembly of the invention is particularly dedicated, the fluid is water.

In the filter body 2, a cyclone separator 3 and a permanent magnet 4 are housed to allow the filtration of metallic and/or heavy particles present in the fluid; for this purpose, the cyclone 3 and the magnet 4 are arranged along a circuit passing through of the filter body, which goes from the supply duct 5 to the discharge duct 6.

According to the invention, the filter assembly 1 comprises a connection flange 8 for the fluid connection with ducts of a heating plant or similar.

The flange 8 includes, in turn, a first 81 and a second 82 inlet fitting and an outlet fitting 83.

Particularly, the first and second inlet fitting 81, 82 are in fluid communication with the supply duct 5, while the outlet fitting 83 is in fluid communication with the discharge duct 6.

Advantageously, the two inlet fittings 81, 82 are oriented in a different way with respect to the body 2 so that the filter assembly 1 can be placed in the correct position regardless of the orientation of the piping of the heating plant, achieving the objects of the invention.

More in detail, it is noted that the first and second inlet fittings 81, 82 are substantially perpendicular to each other; in fact, the Applicant has noted that this preferred arrangement is the one that most easily allows the assembly operation of the filter assembly below the domestic boilers, which usually have little space available.

In the illustrated embodiment, the connection flange 8 and the filter body 2 are connected to a sealingly cylindrical joint 88 so that the flange 8 is freely rotatable with respect to the filter body 2 and allows the two inlet fittings to be orientated in appropriate positions with respect to the position of the piping in the system.

The sealingly cylindrical joint 88 is provided, in this example, with a thread and a cooperating clamping ring between which a sealing gasket (e.g. an O-ring) is installed; anyone skilled in the art will be able to make this connection in different ways, all within the reach of a person skilled without departing from the scope of the present invention.

Note, from now on, that the discharge duct 6 is at least partly concentric and external to the supply duct 5; this allows to effectively and easily make the above-mentioned cylindrical joint.

The latter is connected to a collecting chamber 84 inside the flange 8, to which the first and second inlet fittings 81, 82 are also connected, so that in operation it is possible to choose which of the two should be closed (e.g. with a special screw cap, not shown) and which to use for the connection to the pipes of the domestic heating plant.

We are now going to examine the operating elements of the filter assembly 1, in which the cyclone separator 3 comprises, in succession to one another - in the circuit passing through of the filter body from the supply duct 5 to the discharge duct 6 -:
- an inlet chamber 31 substantially cylindrical
- a separation chamber 32 substantially conical,
- a filtering chamber 33.

The inlet chamber 31 is defined laterally by cylindrical mantle walls 311, which are different from the walls of the body 2 for reasons that will soon be better explained; at the top (again with reference to an operating condition) the inlet chamber 31 is closed by a removable cap 28 which is screwed to the body 2 of the filter assembly and which is provided with an air vent 29. In this regard, it should be noted that, in other not shown embodiments, the vent 29 is not placed on the cap 28, but on body 2.

The inlet chamber 31 is in fluid communication with the supply conduit 5; in particular, it should be noted that the supply duct 5 is radially connected to the inlet chamber 31 so that the fluid to be supplied to the latter is more easily placed in swirling motion (according to the known operating principle of the cyclone separator) with respect to supplies in another direction.

The substantially conical separation chamber 32 (with decreasing diameter in the direction of the fluid) is the portion wherein the fluid accelerates its speed and the separation of solid particles takes place; these particles, in the subsequent filtering chamber 33, are precisely filtered through a mesh filter, whose construction can vary.

Advantageously, the filtering chamber 33 then comprises a substantially toroidal portion 331 that develops at least partly around and externally to the separation chamber 32.

More in detail, the filtering chamber 33 has a substantially cylindrical section, immediately downstream of the outlet of the separation chamber 32, and said substantially toroidal portion 331 extending upwards to externally surround part of the separation chamber 32, for the benefit of the compactness of the assembly, where, indeed, no additional ducts are required.

The compactness of the filter assembly 1 is also ensured by the presence of the annular return chamber 21 of the body 2, which develops around at least part of the cyclone 3 and, preferably, as in the shown embodiments, is placed around at least part of the inlet chamber 31.

In particular, the annular return chamber 21 is delimited at least by the perimeter walls of the body 2 and by those of the inlet chamber 31.

The filtering chamber may be provided with mesh filters, which are disposed differently inside it, to separate it from the annular return chamber 21, so as to prevent the fluid impurities, separated by the action of the cyclone, from passing through it. In this embodiment, the filter chamber 33 houses a substantially cylindrical mesh filter 35 that delimits the filtering chamber 33 with respect to the annular return chamber 21 and has a diameter substantially corresponding to that of the major base of the cone of the cyclone 3, i.e. substantially equal to that of the inlet chamber 31.

As to the annular return chamber 21, it is in fluid communication with the discharge duct 6 so that the fluid can be evacuated towards the fitting 83 after filtration.

Preferably, in order to maximize the compactness of the filter assembly 1, the discharge duct is radially connected to the annular return chamber 21.

Referring now to the used solution for the magnetic filtering for ferrous particles in the fluid, the filter assembly 1 comprises a case 41 for housing the permanent magnet 4.

The latter is inserted in a removable way from the case 41 in order to facilitate the cleaning of the assembly 1.

In the embodiment of Figure 1, the case 41 extends into the inlet chamber 31 of the cyclone 3, in particular extending radially in the inlet chamber 31 of the cyclone 3 and directly facing the opening of the supply duct 5, so as to maximize the proportion of the entering fluid that comes into contact or passes close to the magnet and is then depleted from the ferrous material therein.

For this purpose, in particular the case 41 passes through the perimeter walls of the inlet chamber 31 in a radial direction.

To further improve the magnetic filtering action, the case 41 for housing the permanent magnet extends radially and partly also in the annular return chamber 21, so that the fluid - downstream of the cyclone and of the first cleaning action of the magnet 4, exerted in the inlet chamber 31 - undergoes a second cleaning action by the magnet 4.

The so purified fluid then advances along the annular return chamber 21 until it meets the discharge duct 6 to be then conveyed into the outlet fitting 83.

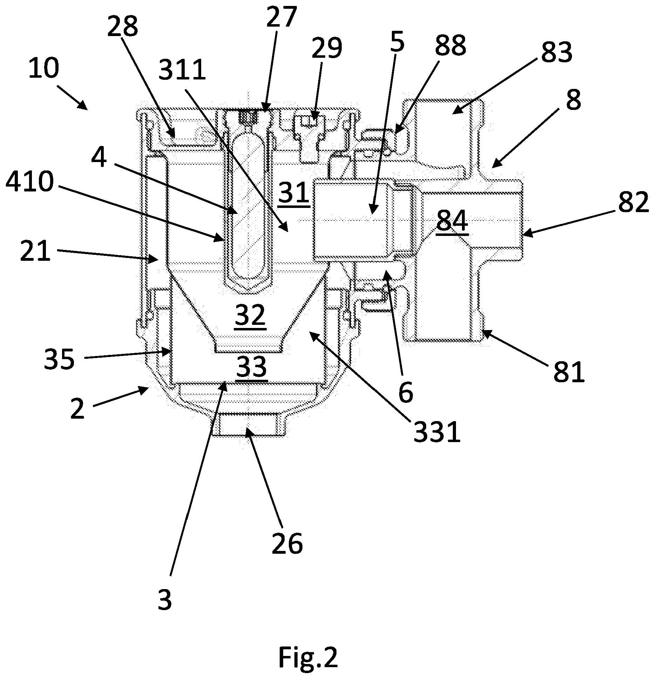

We are now going to examine the embodiment of Figure 2, in which it has a filter assembly 10 absolutely similar to the filter assembly 1 just described, except from the differences that will be immediately highlighted hereafter; for the sake of brevity, the whole description of the filter assembly 10 (as to common parts with assembly 1) is not described, for which reference is made to the above.

The main difference between the assembly 10 and the assembly 1 is the position of the case 410 for housing the permanent magnet, which extends axially in the inlet chamber 31 of the cyclone 3.

This positioning contributes to the overall efficiency of cyclone 3, since the fluid starts to move swirlingly already in the inlet chamber 31 and reaches higher speeds in the separation chamber 32, ultimately improving the carried out solid-liquid separation effect.

To this end, the case 410 is optionally provided with flaps (not shown) able to create a swirling motion in the fluid.

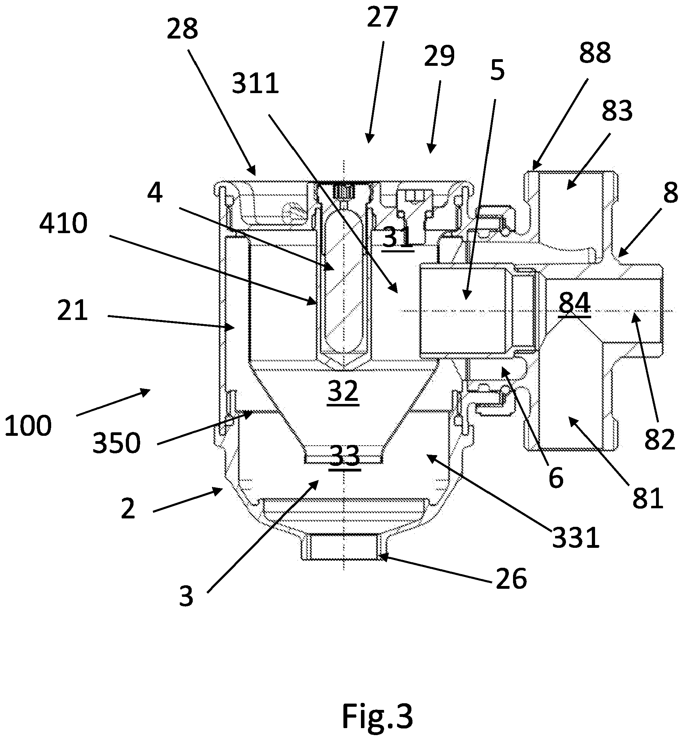

We are now going to examine the filter assembly 100 shown in Figure 3, in which it has features similar to the filter assembly 10 just described, except from the differences that will be immediately highlighted hereafter; for the sake of brevity, the whole description of the filter assembly 100 (as to common parts with assemblies 1 and 10) is not described, for which reference is made to the above.

The difference between the filter assembly 100 and the filter assembly 10 is the shape and arrangement of the mesh filter 350, here essentially shaped as a circular crown and placed transversely with respect to the walls of the filtering chamber 33, which are identified by the walls of the body 2 itself.

On the other hand, the common features between the assemblies 1, 10 and 100 are the presence of a closable opening for cleaning 26 in communication with the cyclone 3 and open towards the outside of the body 2, provided, for example, with a flanged connection through which the user is allowed to access to remove the impurities having been filtered and collected either on the filter 35, 350 or at the bottom of the cyclone 3.

For the same reason, all the assemblies 1, 10, 100 have a closable access opening 27 for the permanent magnet 4, through which the same can be removed to facilitate the separation of the metal particles that have been collected on the case 41, 410, which, under the force of gravity, drops down and can be easily removed.

The above objects are thus achieved.

Obviously, several variants of the above-described features are possible, in particular elements and features described with reference to one of the different embodiments illustrated in the drawings may be combined with features illustrated in other embodiments. For example, the filter 350 may be provided on the filter assembly 1, or the magnet can be placed axially with the supply duct 5 (as in the example of Figure 1) in the filter assembly 100.

## Claims

1. A filter assembly (1,10,100) comprising
- a filter body (2) which defines an internal cavity,
- a supply duct (5), in fluid communication with the cavity of the filter body (2), intended to feed the filter body (2) with a fluid
- a discharge duct (6), in fluid communication with said cavity of the filter body (2), intended to allow the outflow of the fluid from the body
wherein in the filter body (2) a cyclone separator (3) and a permanent magnet (4) are housed placed along a circuit for the passing through of the filter body from the supply duct (5) to the discharge one (6) by the fluid,
**characterized in that**
said filter assembly (1,10,100) comprises a connection flange (8) for the fluid connection with ducts of a heating plant or similar, said flange (8) comprising a first (81) and a second (82) inlet fitting and an outlet fitting (83), said first and second inlet fittings (81,82) being in fluid communication with the supply duct (5), said outlet fitting (83) being in fluid communication with the discharge duct (6), said first and second inlet fitting (81,82) being oriented differently relative to the body (2).

2. The filter assembly (1,10,100) of claim 1, wherein the first and the second inlet fittings (81,82) are substantially perpendicular to each other.

3. The filter assembly (1,10,100) of claim 1 or 2, wherein the connection flange (8) and the filter body (2) are connected with a sealingly cylindrical joint, so that the connecting flange (8) is free to rotate with respect to the filter body (2).

4. The filter assembly (1,10,100) of claim 1, 2 or 3, wherein the cyclone separator (3) comprises, in consecutive order between them in the circuit for the passing through of the filter body from the supply duct (5) to the discharge one (6) by the fluid:
- an inlet chamber (31) substantially cylindrical,
- a separation chamber (32) substantially conical,
- a filtering chamber (33),
wherein the supply duct (5) is connected - preferably radially - to the inlet chamber (31).

5. The filter assembly (1,10,100) of the preceding claim, wherein the filtering chamber (33) comprises a substantially toroidal portion (331) that develops at least partly around and externally to said separation chamber (32).

6. The filter assembly (1,10,100) of claim 4 or 5, wherein the filter body (2) comprises an annular return chamber (21) that develops at least partly around the cyclone (3).

7. The filter assembly (1,10,100) of the preceding claim, wherein the annular return chamber (21) is placed around at least part of the inlet chamber (31).

8. The filter assembly (1,10,100) of claim 6 or 7, wherein the discharge duct (6) is connected - preferably radially - to the annular return chamber (21).

9. The filter assembly (1,10,100) of one or more of the preceding claims, wherein the discharge duct (6) is at least partly concentric and external to the supply duct (5).

10. The filter assembly (1,10,100) of one or more of the preceding claims, comprising a case (41.410) for accommodating the permanent magnet (4), and wherein said case (41.410) extends into the inlet chamber (31) of the cyclone (3).

11. The filter assembly (1) of claim 10, wherein the case (41) for housing the permanent magnet extends radially in the inlet chamber (31) of the cyclone (3).

12. The filter assembly (10,100) of claim 10, wherein the case (410) for housing the permanent magnet extends axially into the inlet chamber (31) of the cyclone (3).

13. The filter assembly (10,100) of claim 10 or 11 when dependent on claim 6, wherein the case (41) for housing the permanent magnet extends radially partly in the annular return chamber (21).

14. The filter assembly (10) of one or more of claims from 4 to 13, wherein the filtration chamber (33) houses a mesh filter (35) substantially cylindrical which delimits the filter chamber (33) with respect to the annular return chamber (21).

15. The filter assembly (100) of one or more of claims 4 to 13, wherein the filtration chamber (33) houses a ring-shaped mesh filter placed crosswise to the walls of the filtration chamber (33).

16. The filter assembly (1,10,100) of one or more of the preceding claims, wherein the filter body (2) comprises
- a closable opening for cleaning (26) in communication with the cyclone (3) and open towards the outside of the filter body (2),
- a closable access opening (27) for the permanent magnet (4),
- a removable cap (28) for closing the inlet chamber (31) of the cyclone (3),
- an air vent (29) for the inlet chamber (31) of the cyclone (3).

## Patentansprüche

1. Eine Filteranordnung (1, 10, 100), umfassend:
- einen Filterkörper (2), der einen inneren Hohlraum definiert,
- einen Zuführkanal (5), der in Fluidverbindung mit dem Hohlraum des Filterkörpers (2) steht und dazu bestimmt ist, den Filterkörper (2) mit einer Flüssigkeit zu versorgen,
- einen Auslasskanal (6), der in Fluidverbindung mit dem Hohlraum des Filterkörpers (2) steht und dazu bestimmt ist, den Abfluss der Flüssigkeit aus dem Körper zu ermöglichen,
wobei im Filterkörper (2) ein Zyklonabscheider (3) und ein Permanentmagnet (4) untergebracht und entlang eines Kreislaufs angeordnet sind zum Durchströmen der Flüssigkeit aus dem Zuführkanal (5) zum Auslasskanal (6) durch den Filterkörper,
**dadurch gekennzeichnet, dass**
besagte Filteranordnung (1, 10, 100) einen Anschlussflansch (8) für die Fluidverbindung mit Kanälen einer Heizungsanlage oder dergleichen umfasst, wobei besagter Flansch (8) einen ersten (81) und einen zweiten (82) Einlassanschluss und einen Auslassanschluss (83) umfasst, wobei besagter erster und zweiter Einlassanschluss (81,82) in Fluidverbindung mit dem Zuführkanal (5) steht, wobei der Auslassanschluss (83) in Fluidverbindung mit dem Auslasskanal (6) steht, wobei die ersten und zweiten Einlassanschlüsse (81, 82) in Bezug auf den Körper (2) unterschiedlich ausgerichtet sind.

2. Die Filteranordnung (1, 10, 100) nach Anspruch 1, wobei besagte erste und zweite Einlassanschlüsse (81, 82) im Wesentlichen senkrecht zueinander stehen.

3. Die Filteranordnung (1, 10, 100) nach Anspruch 1 oder 2, wobei der Verbindungsflansch (8) und der Filterkörper (2) mit einer dichten zylindrischen Verbindung verbunden sind, so dass der Verbindungsflansch (8) in Bezug auf den Filterkörper (2) frei drehbar ist.

4. Die Filteranordnung (1, 10, 100) nach Anspruch 1, 2 oder 3, wobei der Zyklonabscheider (3) in aufeinanderfolgender Reihenfolge entlang eines Kreislaufs zum Durchströmen der Flüssigkeit aus dem Zuführkanal (5) zum Auslasskanal (6) durch den Filterkörper umfasst:
- eine Einlasskammer (31), im Wesentlichen zylindrisch,
- eine Separationskammer (32), im Wesentlichen konisch,
- eine Filterkammer (33),
wobei der Zuführkanal (5) - vorzugsweise radial - mit der Einlasskammer (31) verbunden ist.

5. Die Filteranordnung (1, 10, 100) nach dem vorhergehenden Anspruch, wobei die Filterkammer (33) einen im Wesentlichen toroidalen Abschnitt (331) umfasst, der sich zumindest teilweise um die besagte und außerhalb der besagten Separationskammer (32) entwickelt.

6. Die Filteranordnung (1, 10, 100) nach Anspruch 4 oder 5, wobei der Filterkörper (2) eine ringförmige Rücklaufkammer (21) umfasst, die sich zumindest teilweise um den Zyklon (3) herum entwickelt.

7. Die Filteranordnung (1, 10, 100) nach dem vorhergehenden Anspruch, wobei die ringförmige Rücklaufkammer (21) um mindestens einen Teil der Einlasskammer (31) herum angeordnet ist.

8. Die Filteranordnung (1, 10, 100) nach Anspruch 6 oder 7, wobei der Auslasskanal (6) - vorzugsweise radial - mit der ringförmigen Rücklaufkammer (21) verbunden ist.

9. Die Filteranordnung (1, 10, 100) nach einem oder mehreren der vorhergehenden Ansprüche, wobei der Auslasskanal (6) zumindest teilweise konzentrisch und außerhalb des Zuführkanals (5) angeordnet ist.

10. Die Filteranordnung (1, 10, 100) eines oder mehrerer der vorhergehenden Ansprüche, umfassend ein Gehäuse (41, 410) zur Aufnahme des Permanentmagneten (4), und wobei sich das Gehäuse (41, 410) in die Einlasskammer (31) des Zyklons (3) erstreckt.

11. Die Filteranordnung (1) nach Anspruch 10, wobei sich das Gehäuse (41) zur Aufnahme des Permanentmagneten radial in der Einlasskammer (31) des Zyklons (3) erstreckt.

12. Die Filteranordnung (10, 100) nach Anspruch 10, wobei sich das Gehäuse (410) zur Aufnahme des Permanentmagneten axial in die Einlasskammer (31) des Zyklons (3) erstreckt.

13. Die Filteranordnung (10, 100) nach Anspruch 10 oder 11 in Abhängigkeit von Anspruch 6, wobei sich das Gehäuse (41) zur Aufnahme des Permanentmagneten radial teilweise in die ringförmige Rücklaufkammer (21) erstreckt.

14. Die Filteranordnung (10) nach einem oder mehreren Ansprüchen von 4 bis 13, wobei die Filterkammer (33) einen im Wesentlichen zylindrischen Maschenfilter (35) aufnimmt, der die Filterkammer (33) in Bezug auf die ringförmige Rücklaufkammer (21) begrenzt.

15. Die Filteranordnung (100) nach einem oder mehreren der Ansprüche 4 bis 13, wobei die Filterkammer (33) einen ringförmigen Gitterfilter aufnimmt, der quer zu den Wänden der Filterkammer (33) angeordnet ist.

16. Die Filteranordnung (1, 10, 100) nach einem oder mehreren der vorhergehenden Ansprüche, wobei der Filterkörper (2) umfasst:
- eine verschließbare Öffnung zur Reinigung (26) in Verbindung mit dem Zyklon (3) und offen zur Außenseite des Filterkörpers (2),
- eine verschließbare Zugangsöffnung (27) für den Permanentmagneten (4),
- eine abnehmbare Kappe (28) zum Verschließen der Einlasskammer (31) des Zyklons (3),
- eine Entlüftung (29) für die Einlasskammer (31) des Zyklons (3) .

## Revendications

1. Un ensemble de filtre (1, 10, 100) comprenant
- un corps de filtre (2) qui définit une cavité interne,
- un conduit d'alimentation (5) en communication fluidique avec la cavité du corps de filtre (2), prévu pour alimenter le corps de filtre (2) avec un fluide
- un conduit d'évacuation (6), en communication fluidique avec ladite cavité du corps de filtre (2), prévu pour permettre l'écoulement du fluide hors du corps
où dans le corps de filtre (2), un séparateur à cyclone (3) et un aimant permanent (4) sont logés dans un circuit permettant le passage du fluide à travers le corps de filtre du conduit d'alimentation (5) vers celui d'évacuation (6),
**caractérisé par le fait que**
ledit ensemble de filtre (1, 10, 100) comprend une bride de connexion (8) pour la connexion fluidique avec des conduits d'une installation de chauffage ou similaire, ladite bride (8) comprenant un premier (81) et un second (82) raccord d'entrée et un raccord de sortie (83), lesdits premier et second raccords d'entrée (81, 82) étant en communication fluidique avec le conduit d'alimentation (5), ledit raccord de sortie (83) étant en communication fluidique avec le conduit d'évacuation (6), lesdits premier et second raccords d'entrée (81, 82) étant orientés différemment par rapport au corps (2).

2. L'ensemble de filtre (1, 10, 100) de la revendication 1, où les premier et second raccords d'entrée (81, 82) sont substantiellement perpendiculaire l'un par rapport à l'autre.

3. L'ensemble de filtre (1, 10, 100) de la revendication 1 ou 2, où la bride de connexion (8) et le corps de filtre (2) sont connectés par un joint cylindrique étanche, de sorte que la bride de connexion (8) peut tourner librement par rapport au corps de filtre (2).

4. L'ensemble de filtre (1, 10, 100) de la revendication 1, 2 ou 3, où le séparateur à cyclone (3) comprend, dans un ordre consécutif, dans le circuit pour le passage du fluide à travers le corps de filtre du conduit d'alimentation (5) vers celui de décharge (6) :
- une chambre interne (31) substantiellement cylindrique,
- une chambre de séparation (32) substantiellement conique,
- une chambre de filtration (33),
où le conduit d'alimentation (5) est connecté - de préférence radialement - à la chambre d'entrée (31).

5. L'ensemble de filtre (1, 10, 100) de la revendication précédente, où la chambre de filtration (33) comprend une portion substantiellement toroïdale (331) qui se développe au moins partiellement autour et à l'extérieur de ladite chambre de séparation (32).

6. L'ensemble de filtre (1, 10, 100) de la revendication 4 ou 5, où le corps de filtre (2) comprend une chambre de retour annulaire (21) qui se développe au moins partiellement autour du cyclone (3).

7. L'ensemble de filtre (1, 10, 100) de la revendication précédente, où la chambre de retour annulaire (21) est placée autour d'au moins une partie de la chambre d'entrée (31).

8. L'ensemble de filtre (1, 10, 100) de la revendication 6 ou 7, où le conduit d'évacuation (6) est connecté - de préférence radialement - à la chambre de retour annulaire (21).

9. L'ensemble de filtre (1, 10, 100) d'une ou plusieurs des revendications précédentes, où le conduit d'évacuation (6) est au moins partiellement concentrique et externe par rapport au conduit d'alimentation (5).

10. L'ensemble de filtre (1, 10, 100) d'une ou plusieurs des revendications précédentes, comprenant un boîtier (41.410) pour recevoir l'aimant permanent (4), et où ledit boîtier (41.410) s'étend dans la chambre d'entrée (31) du cyclone (3).

11. L'ensemble de filtre (1, 10, 100) de la revendication 10, où le boîtier (41) pour loger l'aimant permanent s'étend radialement dans la chambre d'entrée (31) du cyclone (3).

12. L'ensemble de filtre (1, 10, 100) de la revendication 10, où le boîtier (410) pour loger l'aimant permanent s'étend axialement dans la chambre d'entrée (31) du cyclone (3).

13. L'ensemble de filtre (1, 10, 100) de la revendication 10 ou 11 lorsqu'elle dépend de la revendication 6, où le boîtier (41) pour loger l'aimant permanent s'étend radialement et partiellement dans la chambre de retour annulaire (21).

14. L'ensemble de filtre (1, 10, 100) d'une ou plusieurs des revendications de 4 à 13, où la chambre de filtration (33) loge un filtre à mailles (35) substantiellement cylindrique qui délimite la chambre de filtration (33) par rapport à la chambre de retour annulaire (21).

15. L'ensemble de filtre (1, 10, 100) d'une ou plusieurs des revendications de 4 à 13, où la chambre de filtration (33) loge un filtre à mailles en forme d'anneau placé transversalement aux parois de la chambre de filtration (33).

16. L'ensemble de filtre (1, 10, 100) d'une ou plusieurs des revendications précédentes, où le corps de filtre (2) comprend
- une ouverture pour le nettoyage pouvant être fermée (26) en communication avec le cyclone (3) et ouverte vers l'extérieur du corps de filtre (2),
- une ouverture d'accès pouvant être fermée (27) pour l'aimant permanent (4),
- un bouchon amovible (28) pour fermer la chambre d'entrée (31) du cyclone (3),
- un évent (29) pour la chambre d'entrée (31) du cyclone (3).
